# EUROPÄISCHE PATENTANMELDUNG

(11) **EP 3 067 239 A1**
(43) Veröffentlichungstag der Anmeldung: **14.09.2016**
(21) Anmeldenummer: 16159280.3
(22) Anmeldetag: 08.03.2016
(51) Int. Cl.: B60R 13/02

(54) **INNENAUSBAU EINES BESTATTUNGSFAHRZEUGS, MIT SICHTFOLIE**

(30) Priorität: 09.03.2015 DE 202015101173 U
(71) Anmelder: Schmidt, Udo, 48734 Reken (DE)
(72) Erfinder: Schmidt, Udo, 48734 Reken (DE)
(74) Vertreter: Habbel, Ludwig

(57) **Zusammenfassung**

Bei einem Innenausbau eines Bestattungsfahrzeugs, mit Flächenelementen, die einen Sargraum begrenzen, wobei die Flächenelemente zum Sargraum hin eine Sichtseite aufweisen, schlägt die Erfindung vor, dass die Sichtseiten der Flächenelemente jeweils durch eine aufgeklebte Folie gebildet sind.

## Beschreibung

Die Erfindung betrifft einen Innenausbau eines Bestattungsfahrzeugs nach dem Oberbegriff des Anspruchs 1.

Gattungsgemäße Innenausbauten sind aus der Praxis bekannt. Beispielsweise werden Holzwerkstoffplatten verwendet, wobei diese von einem Vorlieferanten bereitgestellt werden. Die Sichtseiten von Holzwerkstoffplatten können beispielsweise durch ein Furnier oder einen Furnierdruck gebildet sein. Alternativ zu Holzwerkstoffplatten können Metallplatten verwendet werden, beispielsweise Aluminium- oder Edelstahltafeln. Die Sichtseite derartiger Metallplatten wird üblicherweise durch das Material selbst gebildet, wobei die Sichtseiten gebürstet oder geprägt sein können, um eine gewisse Dekorwirkung zu erzielen. Der Fahrzeughersteller, der den Innenausbau des Bestattungsfahrzeugs durchführt, greift auf eine Palette von Flächenelementen mit unterschiedlichen Dekoren zurück, die seitens des Vorlieferanten lieferbar sind. Ändert sich das Portfolio der vom Vorlieferanten bereitgestellten Dekore, so sind für den Fahrzeughersteller ggf. bestimmte Dekore für den Innenausbau nicht mehr verfügbar. Dies wirkt sich beispielsweise auf Reparaturen aus, wenn nämlich ein beschädigtes Flächenelement eines Innenausbaus nicht mehr dekorgleich ersetzt werden kann.

Der Erfindung liegt die Aufgabe zugrunde, einen gattungsgemäße Innenausbau dahingehend zu verbessern, dass dieser möglichst vielseitig und hygienisch ausgestaltet werden kann und auch nach längerer Nutzungsdauer dekorgleiche Reparaturen ermöglicht.

Diese Aufgabe wird durch einen Innenausbau mit den Merkmalen des Anspruchs 1 gelöst. Vorteilhafte Ausgestaltungen sind in den Unteransprüchen beschrieben.

Die Erfindung schlägt mit anderen Worten vor, dass die Sichtseiten der Flächenelemente jeweils durch eine aufgeklebte Folie gebildet sind. Im Unterschied zu fertig konfektionieren, von einem Vorlieferanten bezogenen Flächenelementen werden die vorschlagsgemäßen Flächenelemente ohne bzw. mit einer unfertigen Sichtseite vom Vorlieferanten als Rohmaterial angeliefert und anschließend mit der jeweils gewünschten Folie versehen, die das jeweils gewünschte Dekor aufweist.

Somit besteht für den Fahrzeughersteller selbst die Möglichkeit, das Dekor des Flächenelements zu bestimmen, welches er für den Innenausbau verwenden möchte. Beispielsweise können Motive verwendet werden, die am PC erstellt worden sind oder mittels einer Digitalkamera fotografiert worden sind. Die Folien können mittels des so genannten Digitaldrucks mit nahezu beliebigen Dekoren erstellt werden, und zwar auch vergleichsweise kleine Flächen, ohne dass ein Mindermengenzuschlag anfällt, so dass beispielsweise im Reparaturfall ein vor längerer Zeit verwendetes Dekor problemlos nachgefertigt werden kann.

Im Unterschied dazu, lediglich einen vergleichsweise kleinen Bereich des Innenausbaus mit einer Folie zu versehen, beispielsweise indem ein Aufkleber oder ein Foto auf ein Flächenelement des Innenausbaus aufgeklebt wird, ist vorschlagsgemäß vorgesehen, dass grundsätzlich die Sichtseiten der Flächenelemente des Innenausbaus durch aufgeklebte Folien gebildet sind. Einzelne Bereiche bzw. Flächenelemente des Innenausbaus können von dieser grundsätzlichen Ausgestaltung ausgenommen sein, beispielsweise dort, wo ein Sarg in den Sargraum des Bestattungsfahrzeugs eingeschoben werden kann bzw. wo der Sarg aufsteht, und wo dementsprechend aus Gründen der Verschleißfestigkeit die oben erwähnten Metallplatten verwendet werden können.

Als Flächenelemente können die oben erwähnten Holzwerkstoffplatten oder Metallplatten verwendet werden, oder Sandwichplatten mit einem vorteilhaft geringen Flächengewicht. Insbesondere die erwähnten Metallplatten oder Sandwichplatten lassen sich problemlos verformen, so dass beispielsweise zwei Flächenabschnitte des Innenausbaus, für die ansonsten 2 separate Holzwerkstoffplatten verwendet würden, durch eine einzige, entsprechend gebogene bzw. gekantete Metallplatte oder Sandwichplatte gebildet werden können. In diesem Fall kann sich die Folie über die Kante hinweg erstrecken, insbesondere wenn ohnehin zunächst das Flächenelement foliert wird und erst anschließend verformt wird. Im Unterschied dazu, zwei ebene Flächenelemente unter Verwendung einer Profilleiste miteinander zu verbinden, in dem beide Flächenelemente in die Profilleiste eingesteckt werden, kann eine fugenlose und dementsprechend hygienische, leicht zu reinigende Oberfläche erzielt werden. Und selbst wenn zwei separate Flächenelemente verwendet werden, kann die Folie vorteilhaft sich über die Kante hinweg erstrecken, so dass eine Fuge zwischen den beiden Flächenelementen durch die Folie zum Sargraum hin abgedeckt ist und auch in diesem Fall eine fugenlose, hygienisch vorteilhafte Oberfläche geschaffen wird.

Dabei kann vorteilhaft vorgesehen sein das die erwähnte Kante nicht scharfkantig, sondern vielmehr gebogen verläuft, so dass die beiden aneinandergrenzenden Abschnitte des Flächenelements mit einem Radius ineinander übergehen. Hierdurch wird ein eventuelles Einreißen der Folie vermieden.

Vorteilhaft kann die Folie so ausgestaltet sein, dass sie nicht den optischen Eindruck einer Kunststofffolie vermittelt, sondern vielmehr den optischen Eindruck eines anderen Materials mit den Vorteilen einer Kunststofffolie kombiniert.

In einer ersten Variante kann die Folie daher beispielsweise als eine sogenannte "Materialfolie" ausgestaltet sein, optisch also so wirken wie ein bestimmtes Material, beispielsweise wie ein metallischer Werkstoff, beispielsweise wie eine gebürstete oder geprägte Aluminium-oder Edelstahltafel.

Oder die Materialfolie kann in einer zweiten Variante die optische Anmutung eines organischen Werkstoffes aufweisen, indem sie beispielsweise als Prägefolie ausgestaltet ist und durch ihre Oberflächenprofilierung und ihre Farbgebung wie Leder oder wie Holz wirkt.

Oder die Folie kann als Spiegelfolie ausgestaltet sein, also frei von einem Dekor sein und vielmehr einen hohen Glanzgrad aufweisen, also ein hohes optisches Reflexionsvermögen. Derartige Spiegelfolien können eingefärbt sein, beispielsweise hoch glänzend weiß oder hoch glänzend schwarz ausgestaltet sein, oder sie können als sogenannte Chromfolie einen metallischen Glanz aufweisen.

Zur optischen Gliederung des Innenausbaus können verschiedene Abschnitte der Sichtflächen mit verschiedenen Dekoren foliert sein, so dass beispielsweise Bereiche mit Holzanmutung und / oder Bereiche mit einer metallischen Anmutung und / oder Bereiche mit einer spiegelglänzenden Oberfläche innerhalb desselben Bestattungsfahrzeugs vorgesehen sein können.

## Patentansprüche

1. Innenausbau eines Bestattungsfahrzeugs, mit Flächenelementen, die einen Sargraum begrenzen,
wobei die Flächenelemente zum Sargraum hin eine Sichtseite aufweisen,
**dadurch gekennzeichnet,**
**dass** die Sichtseiten der Flächenelemente jeweils durch eine aufgeklebte Folie gebildet sind.

2. Innenausbau nach Anspruch 1,
**dadurch gekennzeichnet,**
**dass** die Flächenelemente winklig entlang einer Kante aneinander anschließende Abschnitte aufweisen,
wobei sich die Folie über die Kante hinweg erstreckt.

3. Innenausbau nach Anspruch 2,
**dadurch gekennzeichnet,**
**dass** die Kante gebogen verläuft, derart, dass die beiden Abschnitte mit einem Radius ineinander übergehen.

4. Innenausbau nach einem der vorhergehenden Ansprüche,
**dadurch gekennzeichnet,**
**dass** eine Folie als Prägefolie ausgestaltet ist und eine 3-dimensional strukturierte Oberfläche aufweist.

5. Innenausbau nach einem der vorhergehenden Ansprüche,
**dadurch gekennzeichnet,**
**dass** eine Folie als "Materialfolie" ausgestaltet ist, derart, dass sie ein Dekor aufweist, welches optisch einem metallischen Werkstoff entspricht.

6. Innenausbau nach einem der Ansprüche 1 bis 4,
**dadurch gekennzeichnet,**
**dass** eine Folie als "Materialfolie" ausgestaltet ist, derart,
**dass** sie ein Dekor aufweist, welches optisch einem organischen Werkstoff wie Holz oder Leder entspricht.

7. Innenausbau nach einem der Ansprüche 1 bis 4,
**dadurch gekennzeichnet,**
**dass** eine Folie als "Spiegelfolie" ausgestaltet ist, derart, dass sie frei von einem Dekor ausgestaltet ist und einen hohen optischen Reflexionsgrad aufweist.
